## Europäisches Patentamt
## European Patent Office
## Office européen des brevets

(11) Veröffentlichungsnummer: **0 183 041**
**B1**

(12) **EUROPÄISCHE PATENTSCHRIFT**

(45) Veröffentlichungstag der Patentschrift:
07.01.88

(21) Anmeldenummer: **85113256.3**

(22) Anmeldetag: **18.10.85**

(51) Int. Cl.⁴: **B 60 H 1/00** // F16H21/52

(54) Einstelleinrichtung.

(30) Priorität: **30.11.84 DE 3444230**

(43) Veröffentlichungstag der Anmeldung:
**04.06.86 Patentblatt 86/23**

(45) Bekanntmachung des Hinweises auf die Patenterteilung:
**07.01.88 Patentblatt 88/1**

(84) Benannte Vertragsstaaten:
**FR GB IT**

(56) Entgegenhaltungen:
**DE - A - 3 136 672**
**FR - A - 1 323 562**
**FR - A - 2 335 753**

**N.P. CHIRONIS: "Mechanisms, linkages and mechanical controls", 1965, Seite 54, McGraw-Hill, New York, US;**
**IDEM**

(73) Patentinhaber: **PREH, Elektrofeinmechanische Werke Jakob Preh Nachf. GmbH & Co.,**
**Postfach 1740 Schweinfurter Strasse 5, D-8740 Bad Neustadt/Saale (DE)**

(72) Erfinder: **Bauer, Karl-Heinz, Lerchenstrasse 9, D-8740 Bad Neustadt/Saale (DE)**
Erfinder: **Geiss, Viktor, Ortsteil Irmelshausen 62, D-8741 Höchheim (DE)**

## Beschreibung

Die Erfindung betrifft eine Einstelleinrichtung, insbesondere für Kraftfahrzeug-Heizungen oder -Lüftungen, mit einem an der Vorderseite einer Frontplatte vorgesehenen, um eine Drehachse drehbaren Bedienknopf und mit einem mittels des Bedienknopfes verschieblichen Stellorgan (FR-A-2 335 753).

Derartige Einstelleinrichtungen sind in ein Armaturenbrett eines Kraftfahrzeugs einsetzbar. Mit ihnen werden die Öffnungsweiten von Verteilerklappen für kühle und warme Luft eingestellt. Als Stellorgane dienen geführte Zug- und Druckdrähte.

In der US-A-3 490 518 ist eine Einstelleinrichtung beschrieben, die nicht mit einem Bedienknopf, sondern mittels eines Bedienhebels betätigbar ist. Dieser Bedienhebel ist mit einem Drehelement verbunden, an dessen Umfang Bowdenzüge befestigt sind. Diese werden in einer Ebene senkrecht zur Drehachse bewegt. Dies ist aus Einbaugründen oft unerwünscht, wenn ein um die Drehachse drehbarer Bedienknopf vorgesehen sein soll.

Aufgabe der Erfindung ist es, eine Einstelleinrichtung der eingangs genannten Art vorzuschlagen, bei der die Drehbewegung des Bedienknopfes mit wenigen Bauteilen in eine Längsbewegung für das Stellorgan umgesetzt werden soll und bei der trotz kleinen Drehwinkels des Bedienknopfes ein grosser Hub des Stellorgans erreicht werden soll.

Erfindungsgemäss ist obige Aufgabe bei einer Einstelleinrichtung der eingangs genannten Art dadurch gelöst, dass am Bedienknopf an der Rückseite der Frontplatte eine im spitzen Winkel zur Drehachse verlaufende Führungsschräge vorgesehen ist, mit der der kürzere Hebelarm eines Hebels in Verbindung steht, dessen längerer Hebelarm an dem Stellorgan angreift.

Durch die Erfindung ist mit wenigen Bauteilen die Drehbewegung des Bedienknopfes in eine Längsbewegung umgesetzt. Günstig ist dabei, dass die Längsbewegung parallel oder schräg zur Drehachse gerichtet ist. Dies ermöglicht einen kompakten Aufbau der Einstelleinrichtung. Günstig ist auch, dass der Hub des längeren Hebelarms weitgehend unabhängig von dem Durchmesser des Drehknopfes ist. Es ist also nicht erforderlich, für einen grossen Hub von einem entsprechend grossen Durchmesser des Bedienknopfes auszugehen, was den notwendigen Einbauraum vergrössern würde. Es lässt sich die notwendige Verschiebung des Stellorgans durch einen kleinen Drehwinkel des Bedienknopfes erreichen.

In einer Ausgestaltung der Erfindung ist die Führungsschräge von einer elliptischen Schrägfläche an einem koaxialen Fortsatz des Bedienknopfes gebildet und der Hebel ist um eine Schwenkachse schwenkbar, die senkrecht zur Drehachse verläuft und in der Ebene der Schrägfläche liegt. Dabei verschwenkt die Schrägfläche beim Drehen des Bedienknopfes den Hebel an seinem kürzeren Hebelarm. Entsprechend der Neigung der Schrägfläche und des Verhältnisses der Hebelarme wird das Stellorgan verschoben.

Vorzugsweise liegt der Hebel beidseitig der Schwenkachse an der Schrägfläche an und die Schrägfläche bildet das Ende des koaxialen Fortsatzes. Dadurch erübrigen sich Führungsmittel, die den Hebel gegen die Schrägfläche drücken.

In einer anderen Ausgestaltung der Erfindung ist die Führungsschräge von einer schräg zur Drehachse verlaufenden Bohrung des Drehknopfes gebildet, in der das eine Ende des Hebels drehbar gelagert ist, der Hebel greift mit seinem anderen Ende in eine Längsführung und weist zwischen den beiden Enden eine Abbiegung auf.

Durch die Schräglage der Bohrung bewegt sich der lange Hebelarm beim Drehen des Bedienknopfes an sich auf einem Kreis. Durch die drehbare Lagerung, die Abbiegung und die Längsführung ist erreicht, dass sich der lange Hebelarm im Endergebnis auf der Diagonalen dieses Kreises bewegt.

Die beschriebenen Einstelleinrichtungen sind so aufgebaut, dass bei einer Drehung des Drehknopfes um weniger als 360° der längere Hebelarm seinen maximalen Hub durchführt.

Weitere vorteilhafte Ausgestaltungen der Erfindung ergeben sich aus der folgenden Beschreibung von Ausführungsbeispielen. In der Zeichnung zeigen:

Figur 1 eine Einstelleinrichtung in perspektivischer Rückansicht,

Figur 2 eine Figur 1 ähnliche Einstelleinrichtung in perspektivischer Rückansicht,

Figur 3 eine perspektivische Ansicht einer weiteren Einstelleinrichtung in teilweise auseinandergezogener Darstellung mit einem Planetengetriebe und

Figur 4 ein Figur 3 entsprechendes Ausführungsbeispiel ohne Planetengetriebe.

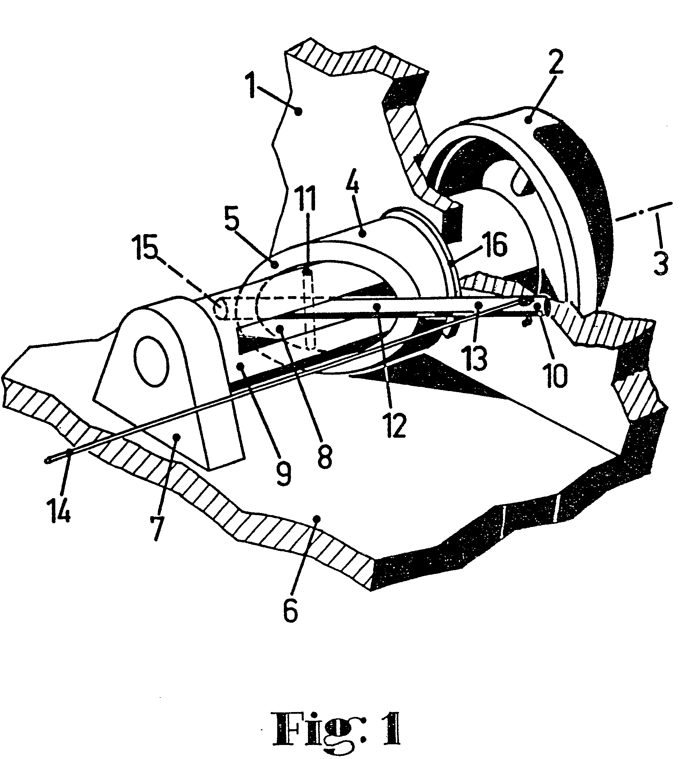

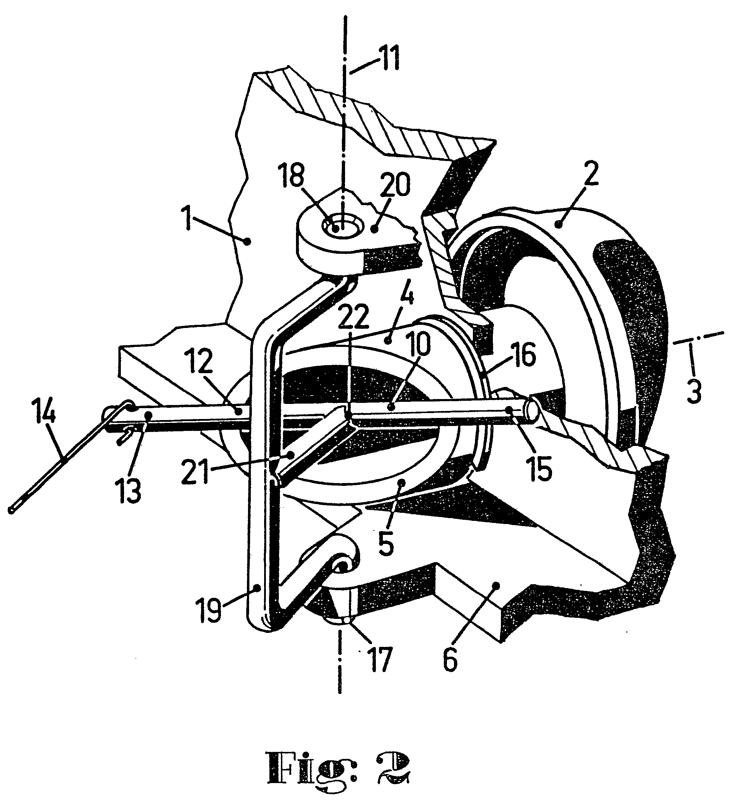

An einer Frontplatte 1 ist ein Bedienknopf 2 um eine Drehachse 3 drehbar gelagert. Bei den Ausführungsbeispielen nach den Figuren 1 und 2 weist der Bedienknopf 2 einen zylindrischen, zur Drehachse 3 koaxialen Fortsatz 4 auf, der an seinem dem Bedienknopf 2 abgewandten Ende in einer elliptischen Schrägfläche 5 endet.

Beim Ausführungsbeispiel nach Figur 1 ist an einer Grundplatte 6 an einem Lagerstück 7 ein mit einem Schlitz 8 versehener Lagerzapfen 9 befestigt, der koaxial zur Drehachse 3 in den Fortsatz 4 greift. Durch den Schlitz 8 ist ein Hebel 10 gesteckt, der in dem Schlitz 8 an einer Schwenkachse 11 schwenkbar gelagert ist. Die Schwenkachse 11 ist in dem Lagerzapfen 9 gehalten.

Der Hebel 10 liegt mit seinem von der Schwenkachse 11 gesehen kürzeren Hebelarm 12 an der Schrägfläche 5 an. Am Ende seines von der Schwenkachse 11 gesehen längeren Hebelarmes 13 greift ein von einem Zug- und Druckdraht 14 gebildetes Stellorgan an.

Die Schwenkachse 11 liegt in der Ebene der Schrägfläche 5. Der Hebel 10 weist an seinem dem Hebelarm 13 abgewandten Ende einen weiteren Hebelarm 15 auf, der ebenfalls an der Schrägfläche 5 anliegt. Der Hebel 10 ist von einem geraden Stabstück gebildet.

Gegen eine axiale Verschiebung ist der Bedienknopf 2 durch einen Sprengring 16 am Fortsatz 4 gesichert. Anschläge zur Begrenzung der Drehbewegung des Bedienknopfes 2 auf einen Wert unter 360° können am Bedienknopf 2 oder dem Fortsatz 4 vorgesehen sein.

Die Funktionsweise der Einstelleinrichtung nach Figur 1 ist etwa folgende:

Wird der Bedienknopf 2 aus der in Figur 1 dargestellten Stellung gedreht, dann drückt die Schrägfläche 5 auf den kürzeren Hebelarm 12, so dass sich der Hebel um die Schwenkachse 11 verschwenkt. Der längere Hebelarm 13 verschiebt dabei den Zug- und Druckdraht 14. Die Strecke der Verschiebung hängt von dem Drehwinkel des Bedienknopfes 2, der Neigung der Schrägfläche 5 gegenüber der Drehachse 3 und dem Verhältnis des kurzen Hebelarmes 12 zum langen Hebelarm 13 ab. Nach einer Drehung um 180° ist beim Ausführungsbeispiel der Maximalhub des Stellorgans 14 erreicht. Wird aus dieser Stellung weiter- oder zurückgedreht, dann drückt nun die Schrägfläche 5 auf den weiteren Hebelarm 15, so dass der Zug- und Druckdraht zurückgezogen wird.

Die Schrägfläche 5 kann auch so unsymmetrisch ausgebildet sein, dass der Maximalhub des Stellorgans erst bei einem Drehwinkel zwischen 180° und 360° erreicht ist. Im Bedarfsfalle kann auch ein weiteres Stellorgan an dem Hebel 10 angreifen. In Figur 1 ist die Richtung des Zug- und Druckdrahtes 14 parallel zur Drehachse 3 dargestellt. Der Zug- und Druckdraht 14 kann jedoch auch schräg zur Drehachse 3 verlaufen.

Beim Ausführungsbeispiel nach Figur 2 ist die Schwenkachse 11 nicht von einem Stift wie in Figur 1, sondern von gelagerten Enden 17 und 18 eines Bügels 19 bebildet. Das Ende 17 ist an der Grundplatte 6 gelagert. Das Ende 18 ist an einem Lagerstück 20 gelagert. Mit dem Bügel 19 ist über einen Steg 21 an einer Verbindungsstelle 22 der Hebel 10 fest verbunden. Die Verbindunsstelle 22 liegt im wesentlichen in der Ebene der Schrägfläche 5 und auf der Schwenkachse 11. Der Hebel 10 ist bezüglich der Schrägfläche 5 beim Ausführungsbeispiel nach Figur 2 damit ebenso angeordnet wie beim Ausführungsbeispiel nach Figur 1.

Die Funktionsweise der Einstelleinrichtung nach Figur 2 gleicht der des Ausführungsbeispiels nach Figur 1. Bei einer Verschwenkung des Hebels 10 um die Schwenkachse 11 geht der Bügel 19 mit.

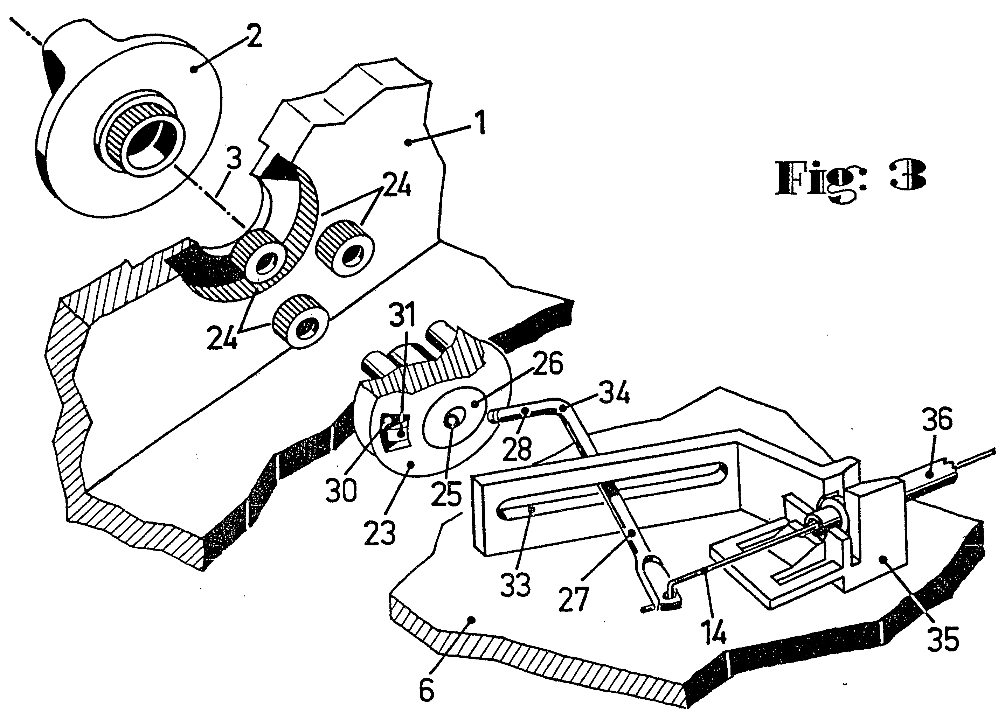

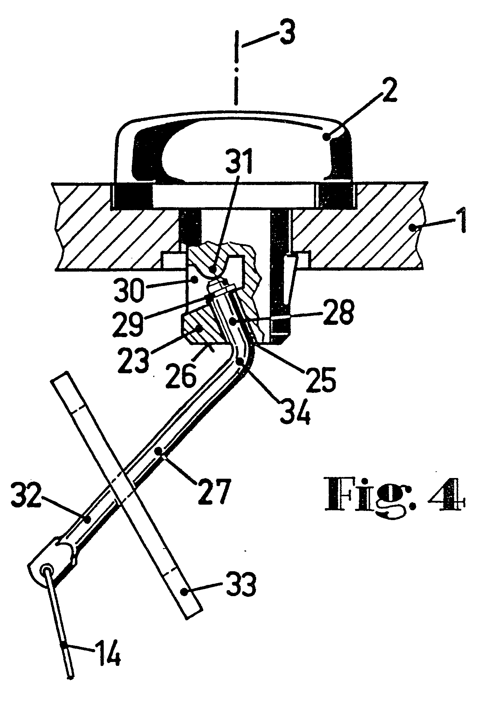

Beim Ausführungsbeispiel nach den Figuren 3 und 4 ist am Bedienknopf 2 ein Drehteil 23 angeordnet. Beim Ausführungsbeispiel nach Figur 3 ist zwischen dem Drehteil 23 und dem Bedienknopf 2 ein Planetengetriebe 24 vorgesehen. Beim Ausführungsbeispiel nach Figur 4 ist das Drehteil 23 Teil des Bedienknopfes 2.

An dem Drehteil 23 ist eine schräg zur Drehachse 3 verlaufende Bohrung 25 vorgesehen (vgl. Figur 4). Die Bohrung 25 steht in einem Winkel zwischen 30° und 45° zur Drehachse 3. Die Bohrung 25 mündet in der Mitte der dem Bedienknopf 2 abgewandten Stirnseite 26 des Drehteils 23. Sie kann jedoch auch exzentrisch zur Drehachse 3 an der Stirnseite 26 münden.

In die Bohrung 25 ist ein Hebel 27 mit seinem kürzeren Hebelarm 28 eingesetzt. Er ist in der Bohrung 25 drehbar gelagert und mittels eines Sprengringes 29 gesichert, der in eine Ausnehmung 30 des Drehteils 23 eingesetzt ist. Das in der Ausnehmung 30 liegende Ende des Hebels 27 stützt sich an einem Höcker 31 ab.

Der Hebel 27 weist einen längeren Hebelarm 32 auf, an dessen Ende der Zug- und Druckdraht 14 angreift. Der längere Hebelarm 32 ist in einer Längsführung 33 geführt. Zwischen dem längeren Hebelarm 32 und dem kürzeren Hebelarm 28 ist eine Abbiegung 34 vorgesehen. Die beiden Hebelarme 28 und 32 stehen dadurch in einem stumpfen Winkel, von beispielsweise 110°, zueinander.

An der Längsführung 33 ist eine Halterung 35 für einen Mantel 36 der Zug- und Druckdrahtes 14 ausgebildet.

Die Funktionsweise der Einstelleinrichtung nach den Figuren 3 und 4 ist etwa folgende:

Wird das Drehteil 23 mittels des Bedienknopfes 2 um die Drehachse 3 gedreht, dann verschwenkt sich dementsprechend der kürzere Hebelarm 28 und die Abbiegung 34. Der längere Hebelarm 32 wandert in der Längsführung 33. Dabei dreht sich der kürzere Hebelarm 28 in der Bohrung 25. Entsprechend wird der Zug- und Druckdraht verschoben.

Nach einer Drehung des Drehteils 24 um 180° ist der Maximalhub des längeren Hebelarms 32 erreicht. Dessen Grösse hängt von dem Winkel zwischen der Bohrung 25 und der Drehachse 3 und dem Winkel der Abbiegung 34 ab.

Soll der Bedienknopf 2 den Maximalhub des längeren Hebelarms 32 mit einer Drehung um einen grösseren Winkel als 180° erreichen, dann ist das Planetengetriebe 24 vorgesehen.

Ersichtlich benötigen die beschriebenen Einstelleinrichtungen nur eine geringe Baubreite und Bautiefe. Es ist damit möglich, an der Frontplatte 1 zwei oder mehrere Einstelleinrichtungen sehr nahe beieinander anzuordnen. Günstig ist auch, dass die Einstelleinrichtungen nur wenige und einfache Bauteile erfordern.

*Bezugszeichenliste 23/84*

1 Frontplatte
2 Bedienknopf
3 Drehachse
4 Fortsatz
5 Schrägfläche
6 Grundplatte
7 Lagerstück
8 Schlitz
9 Lagerzapfen
10 Hebel
11 Schwenkachse
12 kurzer Hebelarm
13 langer Hebelarm
14 Zug- und Druckdraht
15 Hebelarm
16 Sprengring

17 Bügelende
18 Bügelende
19 Bügel
20 Lagerstück
21 Steg
22 Verbindungsstelle
23 Drehteil
24 Planetengetriebe
25 Bohrung
26 Stirnseite des Drehteils
27 Hebel
28 kurzer Hebelarm
29 Sprengring
30 Ausnemung
31 Höcker
32 langer Hebelarm
33 Längsführung
34 Abbiegung
35 Halterung
36 Mantel

## Patentansprüche

1. Einstelleinrichtung, insbesondere für Kraftfahrzeug-Heizungen oder -Lüftungen, mit einem an der Vorderseite einer Frontplatte (1) vorgesehenen, um eine Drehachse (3) drehbaren Bedienknopf (2) und mit einem mittels des Bedienknopfes verschieblichen Stellorgan (14), dadurch gekennzeichnet, dass am Bedienknopf (2) an der Rückseite der Frontplatte (1) eine im spitzen Winkel zur Drehachse (3) verlaufende Führungsschräge (5, 25) vorgesehen ist, mit der der kürzere Hebelarm (12, 28) eines Hebels (10, 27) in Verbindung steht, dessen längerer Hebelarm (13, 32) an dem Stellorgan (14) angreift.

2. Einstelleinrichtung nach Anspruch 1, dadurch gekennzeichnet, dass die Führungsschräge von einer elliptischen Schrägfläche (5) an einem koaxialen Fortsatz (4) des Bedienknopfes (2) gebildet ist und dass der Hebel (10) um eine Schwenkachse (11) schwenkbar ist, die senkrecht zur Drehachse (3) verläuft.

3. Einstelleinrichtung nach Anspruch 2, dadurch gekennzeichnet, dass der Hebel (10) beidseitig der Schwenkachse (11) an der Schrägfläche (5) liegt, dass die Schrägfläche (5) das Ende des koaxialen Fortsatzes (4) bildet und dass die Schwenkachse (11) in der Ebene der Schrägfläche (5) liegt.

4. Einstelleinrichtung nach Anspruch 2 oder 3, dadurch gekennzeichnet, dass die Schwenkachse (11) an einem Lagerzapfen (9) angeordnet ist, der koaxial zum Fortsatz (4) angeordnet ist und einen Schlitz (8) aufweist, durch den der Hebel (10) greift.

5. Einstelleinrichtung nach Anspruch 2 oder 3, dadurch gekennzeichnet, dass der Hebel (10) an einem Bügel (19) befestigt ist, der um die Schwenkachse (11) schwenkbar ist.

6. Einstelleinrichtung nach Anspruch 1, dadurch gekennzeichnet, dass die Führungsschräge von einer schräg zur Drehachse (3) verlaufenden Bohrung (25) gebildet ist, in der der kürzere Hebelarm (28) des Hebels (27) drehbar gelagert ist, dass der Hebel (27) mit seinem längeren Hebelarm (32) in eine Längsführung (33) greift und der Hebel (27) zwischen dem kürzeren Hebelarm (28) und dem längeren Hebelarm (32) eine stumpfwinklige Abbiegung (34) aufweist.

7. Einstelleinrichtung nach Anspruch 6, dadurch gekennzeichnet, dass die Bohrung (25) in einem Winkel zwischen 30° und 45° zur Drehachse (3) steht.

8. Einstelleinrichtung nach Anspruch 6 oder 7, dadurch gekennzeichnet, dass zwischen dem Bedienknopf (2) und einem die Bohrung (25) aufweisenden Drehteil (23) ein Planetengetriebe (24) angeordnet ist.

9. Einstelleinrichtung nach einem der vorhergehenden Ansprüche 6 bis 8, dadurch gekennzeichnet, dass der Winkel der Abbiegung (34) etwa 110° beträgt.

## Claims

1. Control device, more particularly for motor vehicle heating or ventilating systems, having an operating knob (2) which is provided on the front side of a front panel (1) and may be turned about an axis of rotation (3), and having an adjusting element (14) which may be displaced by means of the operating knob, characterised in that provided on the operating knob (2) at the rear side of the front panel (1) there is a guide incline (5, 25) which extends at an acute angle to the axis of rotation (3) and with which the shorter lever arm (12, 28) of a lever (10, 27) is in communication, the longer lever arm (13, 32) of aid lever acting on the adjusting element (14).

2. Control device according to claim 1, characterised in that the guide incline is formed by an elliptic inclined surface (5) on a coaxial extension (4) of the operating knob (2) and that the lever (10) may be pivoted about a pivotal axis (11) which extends such that it is perpendicular to the axis of rotation (3).

3. Control device according to claim 2, characterised in that the lever (10) rests against the inclined surface (5) on both sides of the pivotal axis (11), that the inclined surface (5) forms the end of the coaxial extension (4) and that the pivotal axis (11) lies in the plane of the inclined surface (5).

4. Control device according to claim 2 or 3, characterised in that the pivotal axis (11) is arranged on a bearing journal (9) which is arranged so that it is coaxial to the extension (4) and has a slot (8) through which the lever (10) engages.

5. Control device according to claim 2 ou 3, characterised in that the lever (10) is secured to a stirrup (19) which may be pivoted about the pivotal axis (11).

6. Control device according to claim 1, characterised in that the guide incline is formed by a bore hole (25) which extends so that it is inclined in relation to the axis of rotation (3) and in which the shorter lever arm (28) of the lever (27) is rotatably mounted, that the lever (27) engages with its longer lever arm (32) into a longitudinal guide (33) and the lever (27) has an obtuse-angled bent portion (34) between the shorter lever arm (28) and the longer lever arm (32).

7. Control device according to claim 6, characterised in that the bore hole (25) is at an angle of between 30° and 45° to the axis of rotation (3).

8. Control device according to claim 6 or 7, characterised in that a planetary gearing (24) is arranged between the operating knob (2) and a turning part (23) which has the bore hole (25).

9. Control device according to one of the preceding claims 6 to 8, characterised in that the angle of the bent portion (34) amounts to substantially 110°.

## Revendications

1. Dispositif de réglage, notamment pour installations de chauffage ou ventilation d'automobiles, comportant un bouton (2) de manœuvre, qui est monté sur la face antérieure d'une platine avant (1) et qui peut tourner sur un axe (3), ainsi qu'un organe (14) de réglage, qui peut être déplacé au moyen de ce bouton, dispositif caractérisé en ce qu'il est formé sur le bouton (2), du côté postérieur de la platine (1), une rampe (5, 25) de guidage, qui fait un angle aigu avec l'axe (3) de rotation et qui est en liaison avec le petit bras (12, 28) d'un levier (10, 27) dont le grand bras (13, 32) est en prise avec l'organe (14) de réglage.

2. Dispositif de réglage selon la revendication 1, caractérisé en ce que la rampe est formée par une surface (5) elliptique d'un prolongement (4) coaxial du bouton (2) de manœuvre, et en ce que le levier (10) peut pivoter sur un axe (11) de pivotement qui est perpendiculaire à l'axe (3) de rotation.

3. Dispositif de réglage selon la revendication 2, caractérisé en ce que le levier (10) est appliqué contre la surface oblique (5) de part et d'autre de l'axe (11) de pivotement, en ce que cette surface oblique (5) forme l'extrémité du prolongement (4) coaxial et en ce que l'axe (11) de pivotement se trouve dans le plan de ladite surface oblique (5).

4. Dispositif de réglage selon la revendication 2 ou 3, caractérisé en ce que l'axe (11) de pivotement est disposé dans un tourillon (9), placé coaxialement au prolongement (4) et comportant une fente (8) dans laquelle le levier (10) passe.

5. Dispositif de réglage selon la revendication 2 ou 3, caractérisé en ce que le levier (10) est fixé à un étrier (19), qui peut tourner sur l'axe (11) de pivotement.

6. Dispositif de réglage selon la revendication 1, caractérisé en ce que la rampe de guidage est formée par un alésage (25) oblique par rapport à l'axe (3) de rotation et dans lequel le petit bras (28) du levier (27) est tourillonné, en ce que le grand bras (32) de ce levier (27) est engagé dans une glissière (33) longitudinale et en ce que ledit levier (27) présente entre son petit bras (28) et son grand bras (32) un coude (34) formant un angle obtus.

7. Dispositif de réglage selon la revendication 6, caractérisé en ce que l'alésage (25) fait avec l'axe (3) de rotation un angle compris entre 30° et 45°.

8. Dispositif de réglage selon l'une des revendications 6 ou 7, caractérisé en ce qu'un engrenage planétaire (24) est disposé entre le bouton (2) de manœuvre et un élément rotatif (23) comportant l'alésage (25).

9. Dispositif de réglage selon l'une des revendications précédentes 6 à 8, caractérisé en ce que l'angle formé par le coude (34) est égal sensiblement à 110°.

**Fig. 1**

Fig. 2

Fig: 3

Fig. 4